(19) Europäisches Patentamt
European Patent Office
Office européen des brevets

(11) **EP 4 089 552 B1**

(12) **EUROPEAN PATENT SPECIFICATION**

(45) Date of publication and mention
of the grant of the patent:
**05.03.2025   Bulletin 2025/10**

(21) Application number: **21750900.9**

(22) Date of filing: **07.01.2021**

(51) International Patent Classification (IPC):
***G06F 17/16*** *(2006.01)*       ***G06F 21/31*** *(2013.01)*

(52) Cooperative Patent Classification (CPC):
**G06F 21/31**; G06F 17/16

(86) International application number:
**PCT/KR2021/000195**

(87) International publication number:
**WO 2021/157880 (12.08.2021 Gazette 2021/32)**

(54) **ELECTRONIC APPARTUS AND METHOD FOR PROCESSING DATA THEREOF**

ELEKTRONISCHES GERÄT UND VERFAHREN ZUR DATENVERARBEITUNG

APPAREIL ÉLECTRONIQUE ET MÉTHODE DE TRAITEMENT DES DONNÉES ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **05.02.2020   KR 20200013557**

(43) Date of publication of application:
**16.11.2022   Bulletin 2022/46**

(73) Proprietors:
• **Samsung Electronics Co., Ltd.**
**Suwon-si, Gyeonggi-do 16677 (KR)**
• **INDUSTRIAL COOPERATION FOUNDATION
JEONBUK NATIONAL UNIVERSITY
Jeonju-si, Jeollabuk-do 54896 (KR)**
• **Industry-University Cooperation Foundation
Hanyang University
Seoul 04763 (KR)**

(72) Inventors:
• **KIM, Jinsu**
**Suwon-si, Gyeonggi-do 16677 (KR)**
• **SEO, Jae Hong**
**Seoul 04763 (KR)**
• **LEE, Hyung Tae**
**Jeonju-si, Jeollabuk-do 54896 (KR)**

(74) Representative: **Gulde & Partner
Patent- und Rechtsanwaltskanzlei mbB
Berliner Freiheit 2
10785 Berlin (DE)**

(56) References cited:
KR-A- 20070 024 576     KR-A- 20080 022 729
KR-A- 20180 074 613     KR-B1- 101 275 590
US-A1- 2017 141 920     US-A1- 2018 375 859

• **SEO MINHYE, PARK JONG HWAN, KIM
YOUNGSAM, CHO SANGRAE, LEE DONG HOON,
HWANG JUNG YEON: "Construction of a New
Biometric-Based Key Derivation Function and Its
Application", SECURITY AND COMMUNICATION
NETWORKS, vol. 2018, 2 December 2018
(2018-12-02), pages 1 - 14, XP055833194, ISSN:
1939-0114, DOI: 10.1155/2018/6107912**

**Description**

[Technical Field]

This disclosure relates to an electronic apparatus and a method for processing data thereof, and more particularly, to an electronic apparatus capable of performing error correction on real number data and a method for processing data thereof.

[Background Art]

Recently, necessity for security of user information or device information has emerged. According to this necessity, interest in authentication technology using biometric data is growing.

Examples of biometric data include a fingerprint, iris, face, and voice, and various other biometric information may be used.

Recently, a fuzzy extraction technology that extracts an encryption key directly from biometric information has been used. However, the related-art fuzzy extraction technology was only applicable to binary data, and was difficult to be applied to real number data. Document US 2017/141920 AI relates to a generation of a biometric public key for an individual based on both the individual's biometric data and a secret, in a manner that verifiably characterizes both while tending to prevent recovery of either by anyone other than the individual. Document US 2018/375859 A discloses a method and an apparatus for authenticating user using biometric information.

[Disclosure]

[Technical Problem]

An object of the disclosure is to provide an electronic apparatus capable of performing error correction on real number data and a method for processing data thereof.

[Technical Solution]

The invention is set out in the appended set of claims.

[Description of Drawings]

FIG. 1 is a diagram illustrating an electronic system according to an embodiment of the disclosure;
FIG. 2 is a block diagram illustrating a configuration of an electronic apparatus according to an embodiment of the disclosure;
FIG. 3 is a block diagram illustrating a detailed configuration of an electronic apparatus;
FIG. 4 is a block diagram illustrating a configuration of a server device according to an embodiment of the disclosure;
FIG. 5 is a conceptual diagram illustrating a fuzzy extractor according to an embodiment of the disclosure;
FIG. 6 is a diagram illustrating a fuzzy extraction operation according to an embodiment of the disclosure;
FIG. 7 is a diagram illustrating a fuzzy extraction operation according to another embodiment of the disclosure;
FIG. 8 is a diagram illustrating an operation of a generation module and a decoding module according to an embodiment of the disclosure;
FIG. 9 is a flowchart illustrating a data processing method according to an embodiment of the disclosure; and
FIG. 10 is a flowchart illustrating a data processing method according to another embodiment of the disclosure.

[Best Mode for Invention]

The disclosure will be described in greater detail with reference to the attached drawings.

Terms used in this specification will be briefly described, and the disclosure will be described in detail.

The terms used in the disclosure and the claims are general terms identified in consideration of the functions of embodiments of the disclosure. However, these terms may vary depending on intention, legal or technical interpretation, emergence of new technologies, and the like of those skilled in the related art. In addition, in some cases, a term may be selected by the applicant, in which case the term will be described in detail in the description of the corresponding disclosure. Thus, the term used in this disclosure should be defined based on the meaning of term, not a simple name of the term, and the contents throughout this disclosure.

One or more specific embodiments of the disclosure are illustrated in the drawings and are described in detail in the detailed description. However, it is to be understood that the disclosure is not limited to the one or more specific embodiments. Also, well-known functions or constructions are not described in detail since they would obscure the disclosure with unnecessary detail.

A singular expression includes a plural expression, unless otherwise specified. It is to be understood that the terms such as "comprise" may, for example, be used to designate a presence of a characteristic, number, step, operation, element, component, or a combination thereof, and not to preclude a presence or a possibility of adding one or more of other characteristics, numbers, steps, operations, elements, components or a combination thereof.

The expression "at least one of A and/or B" is to be understood as indicating either "A" or "B" or "A and B".

As used herein, terms such as "first," and "second," may identify corresponding components, regardless of order and/or importance, and are used to distinguish a component from another without limiting the components.

If it is described that a certain element (e.g., first element) is "operatively or communicatively coupled with/to" or is "connected to" another element (e.g., second element), it should be understood that the certain element may be connected to the other element directly or through still another element (e.g., third element).

Terms such as "module," "unit," "part," and so on are used to refer to an element that performs at least one function or operation, and such element may be implemented as hardware or software, or a combination of hardware and software. Further, except for when each of a plurality of "modules," "units," "parts," and the like needs to be realized in an individual hardware, the components may be integrated in at least one module or chip and be realized in at least one processor. In the disclosure, a "user" may refer to a person using an electronic apparatus or an artificial intelligence electronic apparatus using an electronic apparatus (e.g., artificial intelligence electronic apparatus).

Embodiments of the disclosure will be described in detail with reference to the accompanying drawings to aid in the understanding of those of ordinary skill in the art. However, the disclosure may be realized in various different forms and it should be noted that the disclosure is not limited to the various embodiments described herein. Further, in the drawings, parts not relevant to the description may be omitted, and like reference numerals may be used to indicate like elements.

Hereinafter, an embodiment of the disclosure will be described in more detail with reference to the accompanying drawings.

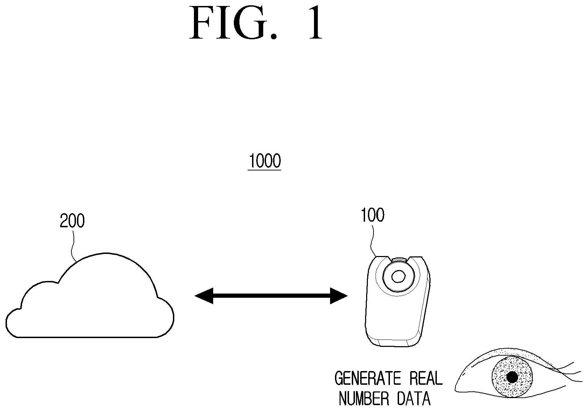

FIG. 1 is a diagram illustrating an electronic system according to an embodiment of the disclosure.

Referring to FIG. 1, an electronic system 1000 may include an electronic apparatus 100 and a server device 200. The electronic system 1000 may be referred to as a user authentication system in terms of performing a user authentication operation using user biometric information.

The electronic apparatus 100 generates real number data. For example, the electronic apparatus 100 may include a sensor capable of extracting biometric information from the user's body, and may generate biometric information (or real number data) having a real number form by using the sensor.

The real number data may be biometric information such as the user's iris, retina, and voice information, and user information in real number form such as information indicating the location of the electronic apparatus 100 (e.g., signal strength, global positioning system (GPS) information, etc.) or device information.

The electronic apparatus 100 may generate a key by using the generated real number data. For example, the electronic apparatus 100 may generate a codeword, a helper matrix, and a vector.

Here, the codeword is a key used for user authentication, etc., and may be referred to as a secret key. These codewords may be randomly generated. In detail, the electronic apparatus 100 may select one of vectors composed of a plurality of elements and having a preset size. For example, in the codeword, 16 elements out of 512 elements may have a size of 1/4 (i.e., a value of $\pm 1/4$) and the remaining elements may have a value of 0. As such, since only 16 elements have a value of $\pm 1/4$, the size of the generated codeword may have a value of 1.

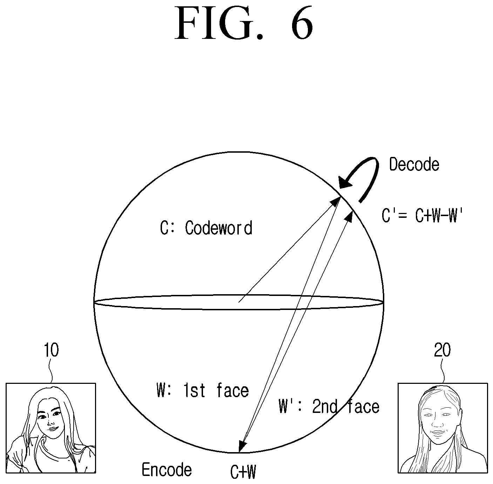

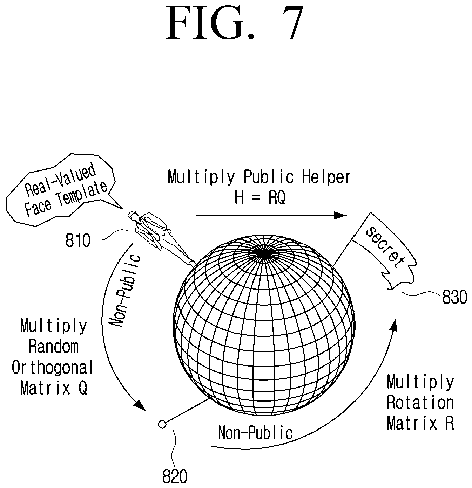

The helper matrix is a vector that relatively moves the value of the sphere surface relative on the surface of the sphere. This helper matrix is for converting real number information into a codeword (or vector), and may be referred to as a public key. The helper matrix may consist of one movement operation, and may also consist of a plurality of movement operations. An example of implementation of the helper matrix will be described later with reference to FIG. 6 or FIG. 7.

The vector is generated by reflecting the generated real number data to the helper matrix, and may be referred to as a codeword in that it corresponds to the above-described codeword. However, for convenience of description, hereinafter, a vector generated in an initial key generation process is referred to as a codeword, and a vector generated in the decoding process is referred to as a decoding codeword or a vector.

The electronic apparatus 100 may perform an error correction operation on the generated vector. Specifically, the electronic apparatus 100 may approximate the value of each element constituting the vector as a preset value or a zero value. For example, if only 16 of the 512 elements of the codeword have a size value of 1/4 (that is, a value of $\pm 1/4$), the vector generated by the helper matrix and real number data has a size of 1, and each element may consist of values such as $\pm 1/4$ or an approximation to zero, for example, +0.25012, -0.0034, etc.

In this case, the electronic apparatus 100 may perform an error correction operation by approximating an element having a value close to 0.25 to a value of 1/4, approximating an element having a value close to -0.25 to a value -1/4, and approximating an element having a value close to 0 to 0. When the error correction operation is performed, in the vector, 16 out of 512 elements may have a value of $\pm 1/4$ in the same manner as a codeword, and the rest may have a value of 0.

The electronic apparatus 100 may include, for example, a biometric information scanner, a smartphone, a tablet PC, a mobile phone, a video phone, a camera, an IR sensor device, a microphone device, a desktop PC, a laptop PC, a netbook computer, a workstation, a personal digital assistant (PDA), a portable multimedia player (PMP), an MP3 player, a medical device, or a wearable device, but is not limited thereto.

The server device 200 may perform user authentication based on the codeword received from the electronic apparatus 100. Specifically, the server device 200 may perform user authentication by comparing the information previously stored in the database with the encrypted biometric information received from the electronic apparatus 100.

For example, the server device 200 may store a codeword (C) value for user A, and when a codeword is received from the electronic apparatus 100, may perform user authentication by comparing the received codeword with a pre-stored codeword.

If error correction is not performed on the codeword generated by the electronic apparatus 100, the server device 200 may calculate a dot product sum between the pre-stored codeword and the received codeword, and may identify equality based on whether the calculated dot product sum is smaller than the preset size.

When error correction is not performed on the codeword generated by the electronic apparatus 100, the server device 200 may perform user authentication based on whether the prestored codeword and the received codeword match (that is, equality).

As described above, since the electronic system 1000 according to the embodiment does not need to convert data to binary data when performing error correction on real number data, more accurate error correction or user authentication is possible. Since the electronic system 1000 according to the disclosure does not need to convert real number data into binary data, error correction or user authentication processing may be performed more quickly.

In illustrating and describing FIG. 1, the electronic apparatus 100 generates a codeword, and the server device 200 receives and uses the codeword. However, in implementation, the server device 200 may generate a codeword or a helper matrix, and the electronic apparatus 100 may receive and use the above-described codeword or helper matrix from the server device 200.

In illustrating and describing FIG. 1, the device for generating a codeword by acquiring real number data and the device for performing user authentication using the generated codeword are shown and described as different, but in implementation, the above-described operation may be performed on one device. For example, in an electronic apparatus such as a smartphone, operations of directly extracting biometric information from a user, generating a codeword based on the extracted information, and performing user authentication by comparing the generated codeword with a pre-generated codeword may be performed on one device.

Although it has been described that the electronic apparatus 100 also extracts biometric information and generates a codeword with the extracted information, the extraction of biometric information and the operation of generating a codeword using the extracted biometric information may be performed in another separate device.

In implementation, three or more devices may operate organically to perform user authentication. For example, when a codeword required for user authentication is stored in the first server and if a service in the second server is required, the codeword generated by the user terminal device may be provided to the first server. The first server provided with the codeword may perform user authentication and provide the result to the second server, so that the user may use the service in the second server.

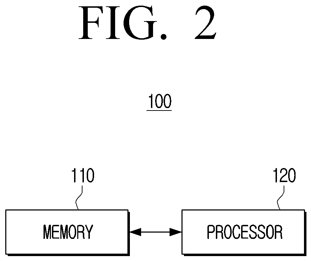

FIG. 2 is a block diagram illustrating a configuration of an electronic apparatus according to an embodiment of the disclosure.

Referring to FIG. 2, the electronic apparatus 100 may include a memory 110 and a processor 120.

At least one instruction related to the electronic apparatus 100 may be stored in the memory 110. For example, various programs (or software) for operating the electronic apparatus 100 according to various embodiments of the disclosure may be stored in the memory 110.

The memory 110 may store a helper matrix. The memory 110 may store a generated vector using a helper matrix. In addition, the memory 110 may store real number data necessary to generate a helper matrix.

The memory 110 may be implemented as a memory physically distinguished from the processor 120. In this case, the memory 110 may be implemented as at least one of a memory embedded within the electronic apparatus 100 or a memory detachable from the electronic apparatus 100 according to the usage of data storage.

For example, the memory 110 may be implemented as at least one of a volatile memory such as a dynamic random access memory (DRAM), a static random access memory (SRAM), a synchronous dynamic random access memory (SDRAM), or a non-volatile memory (for example, one time programmable ROM (OTPROM), programmable ROM (PROM), erasable and programmable ROM (EPROM), electrically erasable and programmable ROM (EEPROM), mask ROM, flash ROM, a flash memory (for example, NAND flash or NOR flash), a hard disk drive (HDD) or a solid state drive (SSD), a memory card (for example, a compact flash (CF), secure digital (SD), micro secure digital (micro-SD), mini secure digital (mini-SD), extreme digital (xD), multi-media card (MMC), etc.), an external memory (for example, a universal serial bus (USB) memory) connectable to the USB port, or the like.

The memory 110 may be implemented as an internal memory such as a read-only memory (ROM) (for example, electrically erasable programmable read-only memory (EEPROM)), a random-access memory (RAM) included in the processor 120.

The processor 120 may control the overall operation of the electronic apparatus 100. For example, the processor 120 may control overall operation of the electronic apparatus 100 by executing at least one instruction stored in the memory 110.

The processor 120 may be composed of a single device such as a central processing unit (CPU), a micro controller unit (MCU), a micro processing unit (MPU), a controller, a system on a chip (SoC), a large scale integration (LSI), an application-specific integrated circuit (ASIC), a field programmable gate array (FPGA), an application processor (AP), etc. or may be composed of the combination of a plurality of devices such as a central processing unit (CPU), graphics processing unit (GPU), or the like.

The processor 120 may perform a key generation operation. Here, the key generation operation may be an operation of generating a codeword and a helper matrix. For example, the processor 120 may select one of vectors composed of a plurality of elements and having a predetermined size as a codeword. When the codeword is selected, the processor 120 may store the codeword in the memory 110 or transmit the codeword to the server device 200.

Meanwhile, in implementation, the codeword may be selected (or generated) by an external device (or server device), and the electronic apparatus 100 may receive and use the codeword selected by the external device.

The processor 120 may generate a helper matrix by using the selected codeword and real number data. For example, the processor 120 may select a random orthogonal matrix for moving real number data in a random direction, calculate a rotation matrix for rotationally moving real number data, and crease the helper matrix by using real number data, the selected random orthogonal matrix, and the calculated rotation matrix. A detailed operation of generating the helper matrix will be described later with reference to FIGS. 6 and 7.

When user authentication is necessary, the processor 120 may calculate a vector (that is, decoding codeword) using the helper matrix pre-generated in the input real number data. For example, the processor 120 may, based on new real number data being input, calculate a vector composed of a plurality of elements by matrix-multiplying the helper matrix by new real number data.

In addition, when the electronic apparatus 100 itself performs user authentication, the processor 120 may perform user authentication by comparing a pre-generated codeword with the vector calculated in the previous process. For example, the processor 120 may calculate the dot product sum of the pre-generated codeword and the calculated vector, and when the size of the calculated dot product sum is smaller than the preset size, it may be determined that the codeword and the vector are identical.

Alternatively, the processor 120 may perform error correction on the calculated vector and perform user authentication by comparing the error-corrected vector (i.e., decoding codeword) with a pre-stored codeword.

As described above, since the electronic apparatus 100 according to the embodiment does not need to convert data to binary data when performing error correction on real number data, more accurate error correction or user authentication is possible. In addition, since the electronic apparatus 100 according to the disclosure does not need to convert data into binary data, it is possible to more quickly perform error correction or user authentication processing.

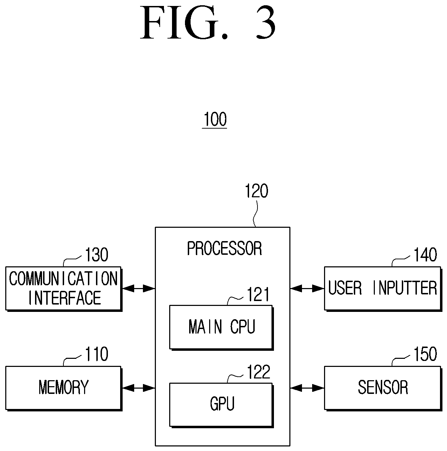

FIG. 3 is a block diagram illustrating a detailed configuration of an electronic apparatus.

Referring to FIG. 3, the electronic apparatus 100 may include a memory 110, a processor 120, a communication interface 130, a user inputter 140, and a sensor 150.

A configuration of the memory 110 and the processor 120 has been described with reference to FIG. 2 and an overlapped description will be omitted.

The communication interface 130 may include a circuitry and may transmit information with an external device. The communication interface 130 may include a Wi-Fi module, a Bluetooth module, a local area network (LAN) module, a wireless communication module, or the like. Each communication module may be implemented as at least one hardware chip.

The wireless communication module may include at least one communication chip performing communication according to various wireless communication standards such as ZigBee, Ethernet, universal serial bus (USB), mobile industry processor interface camera serial interface (MIPI CSI), 3rd generation (3G), 3rd generation partnership project (3GPP), long term evolution (LTE), LTE advanced (LTE-A), 4th generation (4G), 5th generation (5G), or the like. This is merely exemplary, and the communication interface 130 may use at least one communication module among various communication modules.

The processor 120 may include a main CPU 121 and a GPU 122.

The main CPU 121 may access the memory 110 and perform booting using an operating system stored in the memory 110. The main CPU 121 may perform various operations using various programs and contents data, or the like, stored in the memory 110. According to an embodiment, the main CPU 121 may copy a program stored in the memory 110 to random access memory (RAM) according to an instruction stored in read-only memory (ROM), access the RAM, and execute a corresponding program.

The GPU 122 may correspond to a high performance processing device for graphics processing, and may be a specialized electronic circuit designed to accelerate image generation in a frame buffer to quickly process and change a memory and output the processed result to a screen. In addition, the GPU 122 may mean a visual processing unit (VPU).

The user inputter 140 is configured to receive various user commands and information. The processor 120 may execute a function corresponding to a user command input through the user inputter 140, or store information input through the user inputter 140 in the memory 110.

The sensor 150 may generate real number data. The sensor 150 may be a camera capturing a face, or a microphone (not shown) for reading a user's voice. In implementation, the processor 120 may perform an operation such as extraction/editing of the data generated by the sensor 150 to generate real number data. For example, the processor 120 may extract a user's face from the image captured by the sensor 150, and extract only real number data required for face recognition from the extracted face.

Meanwhile, in illustrating and describing FIG. 3, five basic configurations are illustrated and described. However, when implemented, the electronic apparatus 100 may include other configurations in addition to the aforementioned configurations, and some of the aforementioned configurations may be omitted.

It has been described that the processor 120 includes only the main CPU 121 and the GPU 122 in the illustrated example, but in implementation, the processor 120 may further include an arithmetic circuit that performs the above-described key generation operation or vector generation operation.

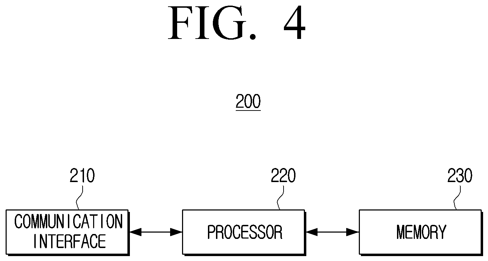

FIG. 4 is a block diagram illustrating a configuration of a server device according to an embodiment of the disclosure.

The server device 200 may include a communication interface 210, a processor 220, and a memory 230.

The communication interface 210 is a configuration capable of transmitting and receiving information to and from the server device 200. The communication interface 210 may receive biometric information or a codeword from the electronic apparatus 100. Thereafter, the communication interface 210 may transmit the authentication result to the electronic apparatus 100.

The memory 230 may store at least one instruction related to the server device 200. For example, various programs (or software) for operating the server device 200 may be stored in the memory 230 according to various embodiments.

The memory 230 may store a helper matrix. The stored helper matrix may be generated by the server device 200 or received from the electronic apparatus 100 through the communication interface 210.

The memory 230 may store the vector generated using the helper matrix. The memory 230 may store real number data necessary to generate a helper matrix.

The processor 220 may control each configuration in the server device 200. When biometric information is received from the electronic apparatus 100, the processor 220 may calculate a vector using a pre-stored helper matrix. In implementation, a vector calculated from the electronic apparatus 100 may be received.

The processor 220 may perform user authentication using the pre-stored codeword and the calculated vector. For example, the processor 220 may determine whether the pre-stored codeword and the calculated vector are the same or whether the dot product of the codeword and the calculated vector is less than a preset value.

The processor 220 may control the communication interface 210 to transmit the user authentication result.

As described above, since the server device 200 according to the embodiment does not need to convert real number data to binary data when performing error correction on real number data, more accurate error correction or user authentication is possible. Since the server device 200 according to the disclosure does not need to convert real number data into binary data, error correction or user authentication processing may be performed more quickly.

In illustrating and describing FIG. 4, only three basic configurations are illustrated and described, but in implementation, the server device 200 may further include additional configurations for performing a function unique to the server device 200 in addition to the above-described configuration.

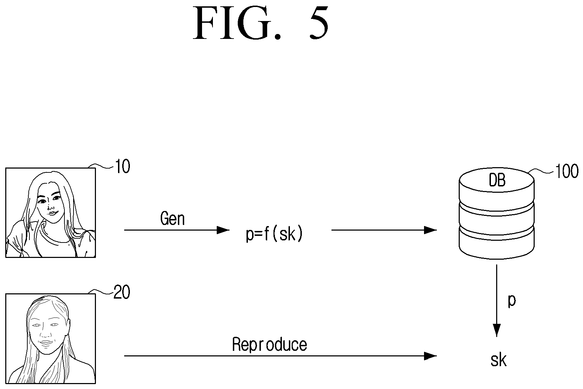

FIG. 5 is a conceptual diagram for describing a fuzzy extractor according to an embodiment of the disclosure.

There are various methods of generating an encryption key using biometric information, and among several methods, the fuzzy extraction method is a method of extracting an encryption key from biometric information itself.

This fuzzy extraction method generates a helper matrix P from the biometric information x, and the generated helper matrix enables codewords to be restored when biometric information similar to pre-registered biometric information is proposed in the future.

For example, as shown in FIG. 5, when the helper matrix P is generated using the first real number data 10 at the time of initial registration, if second real number data 20 which is not the same but similar to the data at the time of initial registration is presented at the time when user authentication is required, a codeword sk may be generated using the second real number data 20 and the helper matrix P.

Since biometric data such as fingerprint/iris has a binary data structure, error correction may be performed using a technology such as a Hamming distance metric.

However, since the existing Hamming distance metric may be applied only to binary data, the Hamming distance metric technology cannot be directly applied to real number type biometric data such as face/voice.

In order to overcome this limitation, there is a method of converting real number data into binary data and using the same. However, when using this conversion process, there is a problem in that the accuracy is lowered and the speed becomes also slower.

In order to solve this problem, the disclosure newly proposes an error correction technology applicable to real number data, and below, the new error correction technology will be described in detail.

The error correction for the real number data according to the disclosure may operate in an nth sphere satisfying Equation 1 below.

[Equation 1]

$$Sn = \{x = (x1, x2, \ldots, xn) \mid x1^2 + x2^2 + \ldots + xn^2 = 1\}$$

Hereinabove, the nth sphere is defined as Sn, but in implementation, the nth sphere may be defined as Sn-1.

In addition, the distance between the two vectors in the sphere may be calculated using a cosine function, and an operation may be performed on the two vectors using the sphere coordinates.

The decoding may be performed by finding the nearest vector using the orthogonal coordinates.

In this example, the codeword may be defined as Equation 2.

[Equation 2]

$$C = U_{i=1}^{l} C_i$$

Here, C is a codeword, and Ci is $C_i = \{x_1, x_2, \ldots, x_n) \in S^n \mid wt(x) = i$ and $x_j = x_k$ if $x_j, x_k \neq 0$ for *all j,k*\}.

For example, in the S4 of the four dimension, C1 may be $\{(\pm 1,0,0,0),(0,\pm 1,0,0),(0,0,\pm 1,0),(0,0,0,\pm 1)\}$. In S4 of the four dimension, C2 may be $\{(\frac{1}{\sqrt{2}}, \frac{1}{\sqrt{2}}, 0, 0), (\frac{1}{\sqrt{2}}, 0, \frac{1}{\sqrt{2}}, 0), \ldots, (0, 0, -\frac{1}{\sqrt{2}}, -\frac{1}{\sqrt{2}})\}$.

Hereinafter, for ease of description, it is assumed that the codeword has C16 in S512. However, in implementation, the number of elements of the codeword and the number of elements having a preset value may be used differently.

In CI, the minimum distance of two vectors is $1 - \frac{1}{2^{i-1}}$, and the minimum distance of two vectors in Ci and Cj is $\frac{1}{\sqrt{2^{j-i}}}$ $(i<j)$.

Accordingly, decoding may be performed through a process of finding the closest codeword for each element of Ci.

Hereinafter, a fuzzy extraction operation using the error correction technology will be described with reference to FIGS. 6 and 7.

FIG. 6 is a diagram illustrating a fuzzy extraction operation according to an embodiment of the disclosure.

Referring to FIG. 6, in order to apply the above-described ECC technology to a fuzzy extraction operation, a codeword c that may satisfy an ECC condition may be generated first. Specifically, some elements (e.g., 16) among the plurality of elements (e.g., 512) may have a preset value (e.g., $\pm 1/4$), and the remaining elements may have a value of 0, and one of the sets having a preset vector size may be selected. The generated codeword may be output by applying a hash function.

The helper matrix p for moving the input real number data 10 to the corresponding codeword C may be calculated.

When the same rotation processing is performed on the input real number data in this sphere environment, the value (C') for the second real number data equals that the difference value between the first real number data (W) (10) and the second real number data (W') (20) is added to the codeword (C).

In the above-described codeword, only a part of the plurality of elements have a predetermined value, so not all surfaces of the sphere are available as a codeword, there are positionable coordinates, and the vector value for the second real number data may find an adjacent corresponding coordinate and use the coordinate as a key value.

As described above, the value moved by the helper matrix is not the biometric information itself, so the value may be used as a public key.

Meanwhile, in the above description, the vector is calculated by moving real number data only once, but in implementation, the vector may be calculated by moving the real number data for a plurality of times. Hereinafter, an operation of moving real number data a plurality of times will be described with reference to FIG. 7.

FIG. 7 is a diagram illustrating a fuzzy extraction operation according to another embodiment of the disclosure.

Referring to FIG. 7, a random codeword may be selected from a set satisfying Equation 1 described above.

A random orthogonal matrix satisfying $Q \in R^{n \times n}$ may be selected. The random orthogonal matrix is a matrix for moving real number data in a random direction.

The rotation matrix for rotating and moving the real number data may be calculated.

To be specific, when the real number data z satisfying $z \in S^n$ is input, first intermediate data (u=Qz) may be calculated by matrix-multiplying the real number data z to the selected random orthogonal matrix Q.

The second intermediate data (v= c- uTcu) may be generated by performing unit orthogonalization (e.g., Gram-Schmidt process) o the codeword c and the first intermediate data u.

The rotation angle θ between the codeword c and the first intermediate data u may be calculated.

The rotation matrix (R = I - uuT - vvT + [u v]Rθ[u v]T) may be calculated by using the calculated rotation angle θ, the first intermediate data u, and the second intermediate data v.

The helper matrix (H=RQ) may be generated using the finally calculated rotation matrix and random orthogonal matrix.

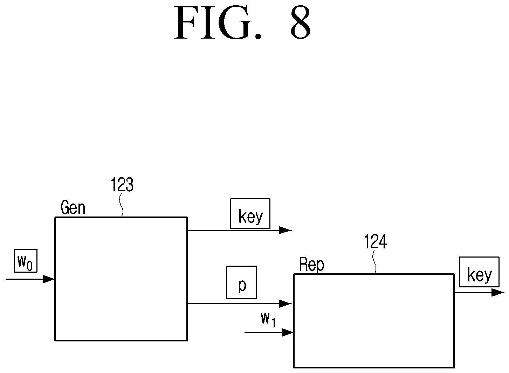

FIG. 8 is a diagram illustrating an operation of a generation module and a decoding module according to an embodiment of the disclosure.

Referring to FIG. 8, a key generation module 123 and a reproduction module 124 are disclosed. The key generation module 123 and the reproduction module 124 may be a hardware configuration (e.g., an operation block in an ASIC) in the processor 120 or a software module.

The key generation module 123 may generate a codeword (key) or a helper matrix (p). Specifically, the key generation module 123 may select one of vectors composed of a plurality of elements and having a preset size as the codeword. For example, if only 16 of the 512 elements of the codeword have a preset value and the remaining values have a value of 0, the codeword may be generated by randomly selecting 16 out of 512 elements that will have a preset value.

The key generation module 123 may generate the helper matrix P by reflecting the real number data Wo to the generated codeword. Such a helper matrix may be of a form in which real number data is moved only once on a sphere surface, or may be configured in a form in which real number data is moved a plurality of times. For example, if it is a form that moves only once, it can be calculated by matrix multiplying real number data by a generated codeword.

When moving twice, the helper matrix may be generated by selecting a random orthogonal matrix for moving real number data in a random direction, calculating a rotation matrix for rotating real number data, and using real number data, the selected random orthogonal matrix, and the calculated rotation matrix.

Such a key generation module 123 may be implemented as an instruction for performing the above-described operation. In this case, the helper matrix P may be generated using the aforementioned GPU 122. In implementation, the key generation module 123 may be implemented as hardware (e.g., ASIC, etc.) capable of performing the above-described operation.

The reproduction module 124 may generate a vector when real number data W1 is input. Specifically, the reproduction module 124 may calculate a vector by matrix- multiplying the pre-generated helper matrix by the real number data w1. The reproduction module 124 may enable each element in the calculated vector to have a predetermined value or a value of 0, so that when real number data W1 similar to real number data wo used in generating the helper matrix is input, the same key (or vector) may be generated.

When real number data having noise is input, the reproduction module 124 may decode a unique codeword in which the angle difference between the codeword and the input real number data is within the range of Equation 3 below.

[Equation 3]

$$\cos^{-1}(\max\{1 - \frac{1}{2^{m-1}} \cdot \frac{1}{\sqrt{2}}\})/2$$

In implementation, the reproduction module 124 may be implemented as a set of instructions (i.e., a program) for performing the above-described operations. In this case, the vector may be generated using the aforementioned GPU 122. In implementation, the reproduction module 124 may be implemented as hardware (e.g., ASIC, etc.) capable of performing the above-described operation.

As described above, in the fuzzy extraction according to the disclosure, there is no need to convert the real number data into binary data, and thus accuracy does not fall. Since the fuzzy extraction according to the disclosure does not require a separate conversion process, faster error correction or user authentication processing is possible.

It has been described that the error correction technology for real number data according to the disclosure is applied only to the fuzzy extraction operation, but the above real number data is not limited to biometric information and may be various information (e.g., position information according to an antenna signal) and may be applied to various fields.

In illustrating and describing FIG. 8, it has been described that the key generation module 123 and the reproduction module 124 are components in the electronic apparatus 100, but at least one of the above-described components may be provided in the server device 200.

In the illustrated example, one device is illustrated as including both the key generation module 123 and the reproduction module 124, but in implementation, the electronic apparatus 100 may include only the key generation module 123 or the reproduction module 124.

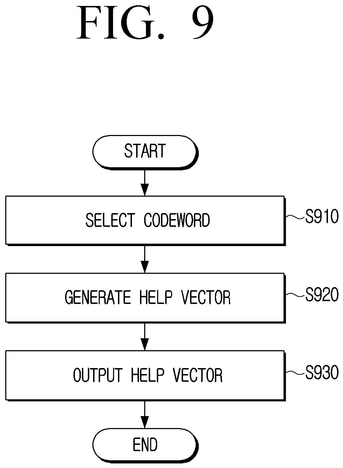

FIG. 9 is a flowchart illustrating a data processing method according to an embodiment of the disclosure.

Referring to FIG. 9, one of a vector among vectors, composed of multiple elements and have a predetermined size is selected as a codeword in operation S910. For example, the vector having a predetermined size in which a predetermined number of elements among the plurality of elements may have a same value other than zero. For example, the vector may consist of 512 elements, and 16 out of 512 elements may have a value of $\pm 1/4$.

The helper matrix is generated by using the selected codeword and the real number data in operation S920. Here, the helper matrix is a vector that relatively moves the value of the sphere surface on the surface of the sphere, and may be one movement on the surface of the sphere, or may be a plurality of movements. For example, in the case of a plurality of movements, the helper matrix may be calculated using a random orthogonal matrix and a rotation matrix.

The helper matrix is output in operation S930. The helper matrix may be utilized as a public key.

As described above, the data processing method according to the embodiment generates a helper matrix for moving real number data on a spherical surface, so that real number data may be directly used without conversion into binary data.

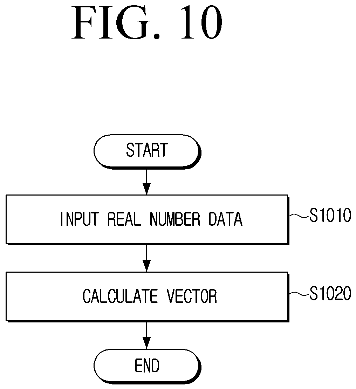

FIG. 10 is a flowchart illustrating a data processing method according to another embodiment of the disclosure.

Referring to FIG. 10, real number data is received in operation S1010.

A vector composed of a plurality of elements is calculated by reflecting the input real number data to a helper matrix that relatively moves a value of a sphere surface on the sphere surface in operation S1020.

After calculation, equality of the calculated vector and the codeword corresponding to the helper matrix may be determined. A dot product sum of the calculated vector and the codeword corresponding to the helper matrix may be calculated, and equality based on whether the size of the calculated dot product sum is smaller than a predetermined size may be determined.

After the calculation above, error correction for the calculated vector may be performed. An element value of each of a plurality of elements constituting the vector may be approximated to a predetermined value or a zero value.

As described above, the data processing method according to the embodiment may perform error correction without separately converting real data into binary data or check whether the real data is identical to existing data, and thus more precise error correction or authentication for real data may be performed.

Since the detailed operation of each step has been described above, a detailed description thereof will be omitted.

Meanwhile, the above-described methods according to various embodiments of the disclosure may be implemented in the form of an application that may be installed in an existing electronic apparatus.

In addition, the above-described methods according to various embodiments of the disclosure may be implemented only by software upgrade or hardware upgrade of an existing electronic apparatus.

In addition, various embodiments of the disclosure described above may be performed through an embedded server provided in the electronic apparatus or at least one external server of the electronic apparatus.

According to an embodiment, the various embodiments described above may be implemented as software including instructions stored in a machine-readable storage media which is readable by a machine (e.g., a computer). The device may include the electronic apparatus according to the disclosed embodiments, as a device which calls the stored instructions from the storage media and which is operable according to the called instructions. When the instructions are executed by a processor 130, the processor may directory perform functions corresponding to the instructions using other components or the functions may be performed under a control of the processor. The instructions may include code generated or executed by a compiler or an interpreter. The machine-readable storage media may be provided in a form of a non-transitory storage media. The 'non-transitory' means that the storage media does not include a signal and is tangible, but does not distinguish whether data is stored semi-permanently or temporarily in the storage media.

According to an embodiment of the disclosure, the method according to the various embodiments described herein may be provided while being included in a computer program product. The computer program product can be traded between a seller and a purchaser as a commodity. The computer program product may be distributed in the form of a machine-readable storage medium (e.g.: a compact disc read only memory (CD-ROM)), or distributed online through an application store (e.g.: PLAYSTORE™). In the case of online distribution, at least a portion of the computer program product may be at least temporarily stored in a storage medium such as a server of a manufacturer, a server of an application store, or a memory of a relay server, or temporarily generated.

The various embodiments described above may be implemented in a recordable medium which is readable by a computer or a device similar to the computer using software, hardware, or the combination of software and hardware. In some cases, embodiments described herein may be implemented by the processor itself. According to a software implementation, embodiments such as the procedures and functions described herein may be implemented with separate software modules. Each of the software modules may perform one or more of the functions and operations described herein.

According to various embodiments described above, computer instructions for performing processing operations of a device according to the various embodiments described above may be stored in a non-transitory computer-readable medium. The computer instructions stored in the non-transitory computer-readable medium may cause a particular device to perform processing operations on the device according to the various embodiments described above when executed by the processor of the particular device.

The non-transitory computer-readable medium is not a medium storing data for a short period of time such as a register, a cache, or a memory, but may refer to a medium that semi-permanently stores data and is readable by a machine. Specific examples of the non-transitory computer-readable medium may include a CD, a DVD, a hard disk drive, a Blu-ray disc, a USB, a memory card, and a ROM.

Each of the elements (e.g., a module or a program) according to various embodiments may be comprised of a single entity or a plurality of entities, and some sub-elements of the abovementioned sub-elements may be omitted, or different sub-elements may be further included in the various embodiments. Alternatively or additionally, some elements (e.g., modules or programs) may be integrated into one entity to perform the same or similar functions performed by each respective element prior to integration. Operations performed by a module, a program, or another element, in accordance with various embodiments, may be performed sequentially, in a parallel, repetitively, or in a heuristically manner, or at least some operations may be performed in a different order, omitted or a different operation may be added.

## Claims

1.  A data processing method comprising:

    Selecting (S910), as a codeword, one from among vectors, which are composed of multiple elements and have a predetermined size;
    Generating (S920) a helper matrix for moving real number data to the selected codeword on a spherical surface, wherein the real number data is at least one of biometric information data, voice information data, or location information data and
    Outputting (S930) the helper matrix.

2.  The method of claim 1, wherein a predetermined number of elements of the multiple elements of the vector in a predetermined size having a same value other than zero,

    wherein the vector consists of 512 elements, and
    wherein 16 elements of the 512 elements have a value of $\pm 1/4$.

3.  The method of claim 1, wherein the helper matrix is a vector relatively moving a value of a sphere surface on the surface of the sphere.

4.  The method of claim 1, wherein the generating the helper matrix comprises:

    selecting a random orthogonal matrix for moving the real number data in a random direction;
    calculating a rotation matrix for rotationally moving the real number data; and
    calculating the helper matrix by using the real number data, the selected random orthogonal matrix, and the calculated rotation matrix.

5.  The method of claim 4, wherein the calculating the rotation matrix comprises:

    calculating first intermediate data by matrix- multiplying the selected random orthogonal matrix by the real number data;
    generating second intermediate data by performing unit orthogonalization processing on the codeword and the first intermediate data;

calculating a rotation angle between the code word and the first intermediate data; and

generating a rotation matrix by using the calculated rotation angle, first intermediate data, and second intermediate data.

6. The method of claim 1, wherein the biometric information data includes face information data.

7. A data processing method comprising:

Receiving (S1010) real number data;

Calculating (S1020) a vector composed of a plurality of elements by matrix-multiplying a helper matrix that relatively moves a value of a sphere surface on the sphere surface by the input real number data, wherein the real number data is at least one of biometric information data, voice information data, or location information data; and

Determining equality of the calculated vector and a codeword corresponding to the helper matrix.

8. The method of claim 7, wherein the determining the equality comprises calculating a dot product sum of the calculated vector and the codeword corresponding to the helper matrix, and determining equality based on whether the size of the calculated dot product sum is smaller than a predetermined size.

9. The method of claim 7, further comprising:

performing error correction on the calculated vector.

10. The method of claim 9, wherein the performing error correction comprises approximating an element value of each of a plurality of elements constituting the vector to a predetermined value or a zero value.

11. An electronic apparatus (100) comprising:

a memory (110) storing at least one instruction; and

a processor (120) for executing the at least one instruction,

wherein the processor (120), by executing the at least one instruction, selects one of the vectors composed of a plurality of elements and having a predetermined size as a codeword, and

generates a helper matrix for moving real number data to the selected codeword on a spherical surface; wherein the real number data is at least one of biometric information data, voice information data, or location information data.

12. The electronic apparatus (100) of claim 11, wherein the processor (120) is further configured to:

select a random orthogonal matrix for moving the real number data in a random direction,

calculate a rotation matrix for rotationally moving the real number data, and

generate the helper matrix by using the real number data, the selected random orthogonal matrix, and the calculated rotation matrix.

13. The electronic apparatus (100) of claim 12, wherein the processor (120) is further configured to:

calculate first intermediate data by matrix-multiplying the selected random orthogonal matrix by the real number data,

generate second intermediate data by performing unit orthogonalization processing on the codeword and the first intermediate data,

calculate a rotation angle between the codeword and the first intermediate data, and

calculate the rotation matrix by using the calculated rotation angle, first intermediate data, and second intermediate data.

14. The electronic apparatus (100) of claim 11, wherein the processor (120) is further configured to, based on new real number data being input, calculate a vector composed of a plurality of elements by reflecting the new real number data to the helper matrix.

**Patentansprüche**

1. Datenverarbeitungsverfahren, umfassend:

   Auswählen (S910), als Codewort, von einem aus Vektoren, die aus mehreren Elementen bestehen und eine vorgegebene Größe aufweisen;
   Erzeugen (S920) einer Hilfsmatrix zum Bewegen von Daten reeller Zahlen zu dem ausgewählten Codewort auf einer sphärischen Oberfläche, wobei die Daten reeller Zahlen mindestens eines von Daten biometrischer Informationen, Sprachinformationsdaten oder Standortinformationsdaten sind; und
   Ausgeben (S930) der Hilfsmatrix.

2. Verfahren nach Anspruch 1, wobei eine vorbestimmte Anzahl von Elementen der mehreren Elemente des Vektors in einer vorbestimmten Größe einen gleichen Wert ungleich Null aufweist,

   wobei der Vektor aus 512 Elementen besteht, und
   wobei 16 Elemente der 512 Elemente einen Wert von $\pm 1/4$ aufweisen.

3. Verfahren nach Anspruch 1, wobei die Hilfsmatrix ein Vektor ist, der einen Wert einer Kugeloberfläche auf der Oberfläche der Kugel relativ bewegt.

4. Verfahren nach Anspruch 1, wobei das Erzeugen der Hilfsmatrix Folgendes umfasst:

   Auswählen einer zufälligen orthogonalen Matrix zum Bewegen der Daten reeller Zahlen in eine zufällige Richtung;
   Berechnen einer Rotationsmatrix zum Rotationsbewegen der Daten reeller Zahlen; und
   Berechnen der Hilfsmatrix unter Verwendung der Daten reeller Zahlen, der ausgewählten zufälligen orthogonalen Matrix und der berechneten Rotationsmatrix.

5. Verfahren nach Anspruch 4, wobei das Berechnen der Rotationsmatrix Folgendes umfasst:

   Berechnen erster Zwischendaten durch Matrixmultiplikation der ausgewählten zufälligen orthogonalen Matrix mit den Daten reeller Zahlen;
   Erzeugen zweiter Zwischendaten durch Durchführen einer Einheitsorthogonalisierungsverarbeitung an dem Codewort und den ersten Zwischendaten;
   Berechnen eines Rotationswinkels zwischen dem Codewort und den ersten Zwischendaten; und
   Erzeugen einer Rotationsmatrix unter Verwendung des berechneten Rotationswinkels, der ersten Zwischendaten und der zweiten Zwischendaten.

6. Verfahren nach Anspruch 1, wobei die Daten biometrischer Informationen Gesichtsinformationsdaten umfassen.

7. Datenverarbeitungsverfahren, umfassend:

   Empfangen (S1010) von Daten reeller Zahlen;
   Berechnen (S1020) eines Vektors, der aus einer Vielzahl von Elementen besteht, durch Matrixmultiplikation einer Hilfsmatrix, die einen Wert einer Kugeloberfläche auf der Kugeloberfläche relativ bewegt, mit den eingegebenen Daten reeller Zahlen, wobei die Daten reeller Zahlen mindestens eines von Daten biometrischer Informationen, Sprachinformationsdaten oder Standortinformationsdaten sind; und
   Bestimmen der Gleichheit des berechneten Vektors und eines Codeworts, das der Hilfsmatrix entspricht.

8. Verfahren nach Anspruch 7, wobei das Bestimmen der Gleichheit Berechnen einer Skalarproduktsumme des berechneten Vektors und des Codeworts, das der Hilfsmatrix entspricht, und Bestimmen der Gleichheit basierend darauf, ob die Größe der berechneten Skalarproduktsumme kleiner als eine vorbestimmte Größe ist, umfasst.

9. Verfahren nach Anspruch 7, ferner umfassend:
   Durchführen einer Fehlerkorrektur an dem berechneten Vektor.

10. Verfahren nach Anspruch 9, wobei das Durchführen der Fehlerkorrektur Annähern eines Elementwerts von jedem einer Vielzahl von Elementen, die den Vektor bilden, an einen vorbestimmten Wert oder einen Nullwert umfasst.

**11.** Elektronische Vorrichtung (100), umfassend:

einen Speicher (110), der mindestens eine Anweisung speichert; und
einen Prozessor (120) zum Ausführen der mindestens einen Anweisung,
wobei der Prozessor (120) durch das Ausführen der mindestens einen Anweisung einen der Vektoren, die aus einer Vielzahl von Elementen bestehen und eine vorbestimmte Größe aufweisen, als ein Codewort auswählt, und eine Hilfsmatrix zum Bewegen von Daten reeller Zahlen zu dem ausgewählten Codewort auf einer sphärischen Oberfläche erzeugt; wobei die Daten reeller Zahlen mindestens eines von Daten biometrischer Informationen, Sprachinformationsdaten oder Standortinformationsdaten sind.

**12.** Elektronische Vorrichtung (100) nach Anspruch 11, wobei der Prozessor (120) ferner konfiguriert ist zum:

Auswählen einer zufälligen orthogonalen Matrix zum Bewegen der Daten reeller Zahlen in eine zufällige Richtung,
Berechnen einer Rotationsmatrix zum Rotationsbewegen der Daten reeller Zahlen, und
Erzeugen der Hilfsmatrix unter Verwendung der Daten reeller Zahlen, der ausgewählten zufälligen orthogonalen Matrix und der berechneten Rotationsmatrix.

**13.** Elektronische Vorrichtung (100) nach Anspruch 12, wobei der Prozessor (120) ferner konfiguriert ist zum:

Berechnen erster Zwischendaten durch Matrixmultiplikation der ausgewählten zufälligen orthogonalen Matrix mit den Daten reeller Zahlen,
Erzeugen zweiter Zwischendaten durch Durchführen einer Einheitsorthogonalisierungsverarbeitung an dem Codewort und den ersten Zwischendaten,
Berechnen eines Rotationswinkels zwischen dem Codewort und den ersten Zwischendaten, und
Berechnen der Rotationsmatrix unter Verwendung des berechneten Rotationswinkels, der ersten Zwischendaten und der zweiten Zwischendaten.

**14.** Elektronische Vorrichtung (100) nach Anspruch 11, wobei der Prozessor (120) ferner konfiguriert ist, um basierend auf einer Eingabe neuer Daten reeller Zahlen einen Vektor zu berechnen, der aus einer Vielzahl von Elementen besteht, indem die neuen Daten reeller Zahlen an die Hilfsmatrix gespiegelt werden.

**Revendications**

**1.** Procédé de traitement de données, comprenant :

sélectionner (S910), en tant que mot codé, un vecteur parmi des vecteurs composés d'éléments multiples et ayant une taille prédéterminée ;
générer (S920) une matrice d'aide pour déplacer des données de nombre réel vers le mot codé sélectionné sur une surface sphérique, les données de nombre réel étant au moins l'une de données d'information biométrique, de données d'information vocale ou de données d'information de lieu, et
sortir (S930) la matrice d'aide.

**2.** Procédé de la revendication 1, dans lequel un nombre prédéterminé d'éléments des éléments multiples du vecteur dans une taille prédéterminée a une même valeur différente de zéro,

dans lequel le vecteur consiste en 512 éléments, et
dans lequel 16 éléments des 512 éléments ont une valeur de $\pm 1/4$.

**3.** Procédé de la revendication 1, dans lequel la matrice d'aide est un vecteur déplaçant relativement une valeur d'une surface sphérique sur la surface de la sphère.

**4.** Procédé de la revendication 1, dans lequel la génération de la matrice d'aide comprend :

sélectionner une matrice orthogonale aléatoire pour déplacer les données de nombre réel dans une direction aléatoire ;
calculer une matrice de rotation pour déplacer par rotation les données de nombre réel ; et

calculer la matrice d'aide en utilisant les données de nombre réel, la matrice orthogonale aléatoire sélectionnée et la matrice de rotation calculée.

5. Procédé de la revendication 4, dans lequel le calcul de la matrice de rotation comprend :

calculer des premières données intermédiaires par multiplication matricielle de la matrice orthogonale aléatoire sélectionnée par les données de nombre réel ;
générer des deuxièmes données intermédiaires en effectuant un traitement d'orthogonalisation unitaire sur le mot codé et les premières données intermédiaires ;
calculer un angle de rotation entre le mot codé et les premières données intermédiaires ; et
générer une matrice de rotation en utilisant l'angle de rotation calculé, des premières données intermédiaires et des deuxièmes données intermédiaires.

6. Procédé de la revendication 1, dans lequel les informations biométriques comprennent des données d'information de visage.

7. Procédé de traitement de données, comprenant :

recevoir (S 1010) des données de nombre réel ;
calculer (S1020) un vecteur composé d'une pluralité d'éléments par multiplication matricielle d'une matrice d'aide qui déplace relativement une valeur d'une surface sphérique sur la surface sphérique par les données de nombre réel d'entrée, les données de nombre réel étant au moins une de données d'information biométrique, de données d'information vocale ou de données d'information de lieu ; et
déterminer l'égalité entre le vecteur calculé et un mot codé correspondant à la matrice d'aide.

8. Procédé de la revendication 7, dans lequel la détermination de l'égalité comprend le calcul d'une somme de produits de points du vecteur calculé et du mot codé correspondant à la matrice d'aide, et la détermination de l'égalité en se basant sur le fait que la taille de la somme de produits de points calculée est plus petite qu'une taille prédéterminée.

9. Procédé de la revendication 7, comprenant en outre :
effectuer une correction d'erreur sur le vecteur calculé.

10. Procédé de la revendication 9, dans lequel la correction d'erreur comprend l'approximation d'une valeur d'élément de chacun d'une pluralité d'éléments constituant le vecteur à une valeur prédéterminée ou à une valeur zéro.

11. Dispositif électronique (100) comprenant :

une mémoire (110) stockant au moins une instruction ; et
un processeur (120) pour exécuter l'au moins une instruction,
dans lequel le processeur (120), en exécutant l'au moins une instruction, sélectionne l'un des vecteurs composés d'une pluralité d'éléments et ayant une taille prédéterminée en tant que mot codé, et
génère une matrice d'aide pour déplacer des données de nombre réel vers le mot codé sélectionné sur une surface sphérique ; les données de nombre réel étant au moins l'une de données d'information biométrique, de données d'information vocale ou de données d'information de lieu.

12. Dispositif électronique (100) de la revendication 11, dans lequel le processeur (120) est en outre configuré pour :

sélectionner une matrice orthogonale aléatoire pour déplacer les données des nombre réel dans une direction aléatoire,
calculer une matrice de rotation pour déplacer par rotation les données de nombre réel, et
générer la matrice d'aide en utilisant les données de nombre réel, la matrice orthogonale aléatoire sélectionnée et la matrice de rotation calculée.

13. Dispositif électronique (100) de la revendication 12, dans lequel le processeur (120) est en outre configuré pour :

calculer des premières données intermédiaires par multiplication matricielle de la matrice orthogonale aléatoire sélectionnée par les données de nombre réel,
générer des deuxièmes données intermédiaires en effectuant un traitement d'orthogonalisation unitaire sur le mot codé et les premières données intermédiaires,

calculer un angle de rotation entre le mot codé et les premières données intermédiaires, et

calculer la matrice de rotation en utilisant l'angle de rotation calculé, des premières données intermédiaires et des deuxièmes données intermédiaires.

14. Dispositif électronique (100) de la revendication 11, dans lequel le processeur (120) est en outre configuré pour, en se basant sur l'entrée de nouvelles données de nombre réel, calculer un vecteur composé d'une pluralité d'éléments en reflétant les nouvelles données de nombre réel vers la matrice d'aide.

# FIG. 1

1000

200

100

GENERATE REAL
NUMBER DATA

# FIG. 2

100

110                                    120

| MEMORY | ←→ | PROCESSOR |

# FIG. 3

100

# FIG. 4

<u>200</u>

210                           220                          230

| COMMUNICATION INTERFACE | ←→ | PROCESSOR | ←→ | MEMORY |

# FIG. 5

# FIG. 6

Decode

C': C+W-W'

C: Codeword

10

20

W: 1st face

W': 2nd face

Encode    C+W

# FIG. 7

# FIG. 8

# FIG. 9

```
           ┌──────────┐
           │  START   │
           └────┬─────┘
                │
                ▼
    ┌───────────────────────┐
    │    SELECT CODEWORD     │───S910
    └───────────┬───────────┘
                │
                ▼
    ┌───────────────────────┐
    │  GENERATE HELP VECTOR  │───S920
    └───────────┬───────────┘
                │
                ▼
    ┌───────────────────────┐
    │   OUTPUT HELP VECTOR   │───S930
    └───────────┬───────────┘
                │
                ▼
           ┌──────────┐
           │   END    │
           └──────────┘
```

# FIG. 10

```
          ┌─────────────┐
          │    START    │
          └──────┬──────┘
                 │
                 ▼
   ┌─────────────────────────────┐
   │   INPUT REAL NUMBER DATA     │────S1010
   └──────────────┬──────────────┘
                  │
                  ▼
   ┌─────────────────────────────┐
   │      CALCULATE VECTOR        │────S1020
   └──────────────┬──────────────┘
                  │
                  ▼
          ┌─────────────┐
          │     END     │
          └─────────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017141920 A

- US 2018375859 A